# EUROPÄISCHE PATENTANMELDUNG

(11) **EP 1 182 357 A1**
(43) Veröffentlichungstag der Anmeldung: **27.02.2002**
(21) Anmeldenummer: 01120139.9
(22) Anmeldetag: 21.08.2001
(51) Int. Cl.: F15B 11/16, F15B 21/08, B62D 5/07, B62D 5/06, B66F 9/22

(54) **Hydraulische mit einer Steuerelektronik versehene Schaltanordnung für einen prioritätsberechtigten Verbraucher**

(30) Priorität: 22.08.2000 DE 10041061
(71) Anmelder: STILL GMBH, D-22113 Hamburg (DE)
(72) Erfinder: Fromme, Georg, Dr., 22145 Hamburg (DE); Suchanek, Joseph, 21079 Hamburg (DE); Meyer, Gunter, 21033 Hamburg (DE)
(74) Vertreter: Lang, Michael (DE)

(57) **Zusammenfassung**

Eine hydraulische Schaltanordnung weist eine Pumpe (3) auf, an die eine Mehrzahl von Verbrauchem (1, 2) mit jeweils vorgeschaltetem Steuerventil (V1, V2) angeschlossen ist. Mindestens ein Verbraucher (1) ist prioritätsberechtigt, bevorzugt die hydraulische Lenkung einer Arbeitsmaschine, insbesondere eines Flurförderzeugs. Um den Aufbau der Schaltungsanordnung zu vereinfachen, sind erfindungsgemäß die Steuerventile (V1, V2) in Abhängigkeit vom Druckmittelbedarf des prioritätsberechtigten Verbrauchers (1) betätigbar und ist zur Ermittlung des Druckmittelbedarfs eine Steuereinheit (7) vorgesehen, an die ein Sollwertgeber (9) und ein Istwertgeber (8) des prioritätsberechtigten Verbrauchers (1) angeschlossen sind. Die Steuereinheit (7) steht in Wirkverbindung mit den Steuerventilen (V1, V2). Die Pumpe (3) ist bevorzugt als Konstantpumpe mit Antrieb durch einen drehzahlveränderlichen Elektromotor (4) ausgebildet. Der Förderstrom der Pumpe (3) ist durch die Steuereinheit (7) einstellbar, die zu diesem Zweck an eine Drehzahlsteuerung und/oder -regelung (5) des Elektromotors (4) angeschlossen ist. Die Steuerventile (V1, V2) sind jeweils als elektrisch betätigbare, insbesondere elektro-magnetisch betätigbare Wegeventile ausgebildet und zu einem Ventilblock (B) zusammengefasst. Die Steuereinheit (7) ist als Steuerelektronik ausgeführt.

## Beschreibung

Die Erfindung betrifft eine hydraulische Schaltanordnung mit einer Pumpe, an die eine Mehrzahl von Verbrauchern mit jeweils vorgeschaltetem Steuerventil angeschlossen ist, wobei mindestens ein Verbraucher prioritätsberechtigt ist.

In hydraulischen Antriebssystemen mit Druckmittelversorgung aus einer für alle Verbraucher gemeinsamen Druckmittelquelle ergibt sich in vielen Fällen die Notwendigkeit, einen der Verbraucher bevorzugt mit Druckmittel zu versorgen. So stellt beispielsweise in Arbeitsmaschinen, wie Flurförderzeugen, die hydraulische Lenkung einen prioritätsberechtigten Verbraucher dar. Die Lenkung muß vor allen anderen Verbrauchem und möglichst unter allen Umständen mit Druckmittel versorgt werden, um gefährliche Fahrzustände zu vermeiden. In der Praxis wird dies dadurch erreicht, dass ein sogenanntes Prioritätsventil eingesetzt wird. Dieses erkennt die Ansteuerung des prioritätsberechtigten Verbrauchers und sorgt für eine bevorzugte Versorgung mit Druckmittel. Dabei steht lediglich der Überschuss an Druckmittel, der vom prioritätsberechtigten Verbraucher nicht benötigt wird, den restlichen Verbrauchern zur Verfügung.

Eine gattungsgemäße Schaltanordnung ist aus der US 4 144 946 bekannt. Die Verbraucher werden - bis auf die hydraulische Lenkung - mit Hilfe von manuell betätigten Steuerventilen betrieben. Sobald von einem Sensor erkannt wird, das der prioritätsberechtigte Verbraucher, in diesem Fall die hydraulische Lenkung eines Gabelstaplers, betrieben werden soll, wird ein Prioritätsventil elektrisch betätigt und die hydraulische Lenkung bevorzugt mit Druckmittel versorgt.

Der vorliegenden Erfindung liegt die Aufgabe zu Grunde, eine hydraulische Schaltanordnung der eingangs genannten Art zur Verfügung zu stellen, deren Aufbau vereinfacht ist und die eine wirtschaftliche Betriebsweise ermöglicht.

Diese Aufgabe wird erfindungsgemäß dadurch gelöst, dass die Steuerventile in Abhängigkeit vom Druckmittelbedarf des prioritätsberechtigten Verbrauchers betätigbar sind, wobei zur Ermittlung des Druckmittelbedarfs eine Steuereinheit vorgesehen ist, an die ein Sollwertgeber und ein Istwertgeber des prioritätsberechtigten Verbrauchers angeschlossen sind und wobei die Steuereinheit in Wirkverbindung mit den Steuerventilen steht.

Der erfindungswesentliche Gedanke besteht dabei darin, die Steuerventile so zu beeinflussen, dass ein prioritätsberechtigter Verbraucher, der gerade angesteuert wird, ausreichend mit Druckmittel versorgt wird. Zu diesem Zweck wird das Steuerventil des prioritätsberechtigten Verbrauchers aufgesteuert und werden die Steuerventile der nicht bevorrechtigten Verbraucher durch die Steuereinheit deaktiviert oder soweit im Durchlass verringert, dass genügend Druckmittel für den prioritätsberechtigten Verbraucher zur Verfügung steht.

Dies ermöglicht einen Verzicht auf das bisher erforderliche Prioritätsventil und somit eine Vereinfachung der hydraulischen Schaltanordnung. Im Hinblick auf die Priorisierung des Verbrauchers sind an den Steuerventilen keine besonderen Maßnahmen erforderlich, d.h. es können übliche Steuerventile verwendet werden.

Durch die Steuereinheit kann mit nur geringem Aufwand im Prinzip jeder beliebige Verbraucher priorisiert werden. Zu diesem Zweck benötigt die Steuereinheit Informationen über den Druckmittelbedarf der zu priorisierenden hydraulischen Funktion. Diese Information kann auf verschiedene Weise ermittelt werden.

Eine bevorzugte Möglichkeit ist der Soll-Ist-Vergleich. Die Steuereinheit erkennt eine unzureichende Versorgung des prioritätsberechtigten Verbrauchers, wenn die sollwertabhängige Betätigung des zugeordneten Steuerventils nicht zu der erwarteten Veränderung des Istwertes des Prioritätsverbrauchers führt (indirekte Messung, z.B. der Position, der Geschwindigkeit etc.). In diesem Fall werden die übrigen Steuerventile soweit geschlossen, bis die Funktion des prioritätsberechtigten Verbrauchers gewährleistet ist.

Selbstverständlich ist es auch möglich, den einzelnen Verbrauchern gestaffelte Prioritäten zuzuweisen, also eine Prioritäts-Reihenfolge vorzusehen, nach der die einzelnen Verbraucher mit Druckmittel versorgt werden. Bei gleichzeitigiger Ansteuerung mehrerer Verbraucher ist dabei ein definierter Ablauf der einzelnen Verbraucherbewegungen sichergestellt. In der Steuereinheit können zu diesem Zweck alle denkbaren und sinnvollen Bewegungskombinationen gespeichert sein. Dadurch sind bei Parallelbetätigung von Verbrauchern unerwünschte gegenseitige Beeinflussungen von Verbrauchern, die last- und/oder typbedingt sind, vermeidbar.

Eine zweckmäßige Ausgestaltung der Erfindung sieht vor, dass zwischen einer an die Pumpe angeschlossenen Versorgungsleitung der Steuerventile und einer zu einem Tank führenden Rücklaufleitung eine Druckwaage angeordnet ist, die durch den Lastdruck der Verbraucher von einer die Versorgungsleitung mit der Rücklaufleitung verbindenden Stellung in eine Sperrstellung steuerbar ist.

Diese Anordnung wird vor allem dann zum Einsatz kommen, wenn die Pumpe immer mit einem bestimmten Mindestförderstrom betrieben wird. Dabei wird aus energetischen Gründen mit Hilfe der Druckwaage in der Hydraulik immer nur der Druck aufgebaut, der für den jeweils betätigten Verbraucher erforderlich ist. Zur Aufrechterhaltung des Verbraucherdruckes nicht benötigtes Druckmittel fließt zum Tank. Bei unbetätigten Verbrauchern und laufender Pumpe befindet sich das Druckmittel in einem Umlauf, wird also direkt von der Pumpe in den Tank gefördert. Die dabei entstehenden Verluste sind sehr gering. Bei Betätigung eines der Steuerventile wird durch den Druck in einer sogenannten Load-Sensing-Steuerleitung (LS-Leitung) die Druckwaage soweit betätigt und damit der Druck in der Versorgungsleitung soweit erhöht, bis der angesteuerte Verbraucher mit der gewünschten Bewegungsgeschwindigkeit betrieben wird.

Sofern die Pumpe einen einstellbaren Förderstrom aufweist und in Wirkverbindung mit der Steuereinheit steht, kann der Förderstrom der Pumpe entsprechend den Anforderungen der Verbraucher angepasst werden. Dabei werden Umlaufverluste nahezu vollständig vermieden.

Gemäß einer Ausgestaltung der Erfindung ist es dabei besonders günstig, wenn die Pumpe als Konstantpumpe mit Antrieb durch einen drehzahlveränderlichen Elektromotor ausgebildet ist, der eine an die Steuereinheit angeschlossene Drehzahlsteuerung und/oder -regelung aufweist. Ein solcher Antrieb ermöglicht bei einem hohen Wirkungsgrad eine schnelle Anpassung des Förderstroms über einen weiten Arbeitsbereich.

Der Erfindung kann jedoch auch in hydraulischen Schaltanordnungen eingesetzt werden, in denen der Förderstrom der Pumpe nicht einstellbar ist.

Die Steuerventile sind mit Vorteil jeweils als elektrisch betätigbare, insbesondere elektro-magnetisch betätigbare Wegeventile ausgebildet und die Steuereinheit ist als Steuerelektronik ausgeführt. Dabei wird z. B. der Längsschieber des Wegeventiles proportional zur Stromamplitude der Spule eines Zugmagneten bewegt. Die elektrische Betätigung der Steuerventile ermöglicht in Kombination mit der Ausführung der Steuereinheit als Steuerelektronik eine sehr einfache Wirkverbindung zwischen diesen Komponenten.

Weitere Vorteile ergeben sich bei einer Ausgestaltung der Erfindung, bei der die Steuerventile zu einem Ventilblock zusammengefasst sind. Neben den Anschlüssen für die einzelnen Verbraucher wird hierbei nur ein einziger Anschluss für die Versorgungsleitung und die Rücklaufleitung benötigt. Die bereits beschriebene Druckwaage kannsofern vorhanden - dabei ebenfalls integriert und von allen Verbrauchern gemeinsam genutzt werden (Eingangsdruckwaage).

Der prioritätsberechtigte Verbraucher ist bevorzugt als hydraulische Lenkung einer Arbeitsmaschine, insbesondere eines Flurförderzeugs, ausgebildet.

Weitere Vorteile und Einzelheiten der Erfindung werden anhand eines in der schematischen Figur dargestellten Ausführungsbeispiels näher erläutert.

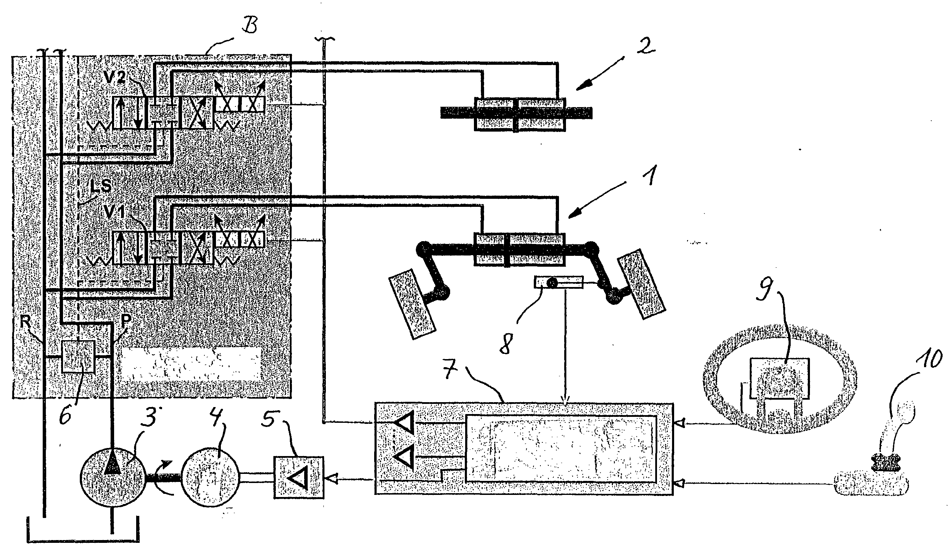

Das Ausführungsbeispiel zeigt eine hydraulische Schaltanordnung für eine Arbeitsmaschine, z.B. ein Flurförderzeug, mit einem prioritätsberechtigten, als hydraulische Lenkung ausgebildeten Verbraucher 1 und einem als Arbeitshydraulik ausgebildeten Verbraucher 2. Es können auch weitere, in der Figur nicht dargestellte Verbraucher hydraulischer Energie vorgesehen sein. Als Verbraucher kommen - wie dargestelltsowohl linear wirkende Hydraulikzylinder in Frage (einfach oder doppelt wirkend) als auch rotatorisch wirkende Verbraucher.

Beiden Verbrauchern 1 und 2 ist jeweils ein Steuerventil V1 bzw. V2 vorgeschaltet. Diese sind als elektro-magnetisch betätigbare, in Zwischenstellungen drosselnde Wegeventile ausgeführt und an eine Versorgungsleitung P sowie an eine Rücklaufleitung R angeschlossen. Prinzipiell ist die Ventilbauart und die Art der elektrischen Ansteuerung jedoch beliebig.

Die Versorgungsleitung P ist mit einer Pumpe 3 verbunden, die als Konstantpumpe ausgebildet ist und von einem Elektromotor 4 mit einer Drehzahlsteuerung und/oderregelung 5 angetrieben wird. Die Rücklaufleitung R mündet in einem Tank 4.

Zwischen der Versorgungsleitung P und der Rücklaufleitung R ist eine Druckwaage 6 angeordnet, die durch den Lastdruck der Verbraucher 1, 2 der in einer Load-Sensing-Leitung LS geführt ist, von einer die Versorgungsleitung P mit der Rücklaufleitung R verbindenden Stellung in eine Sperrstellung steuerbar ist. Die Druckwaage 6 ist mit den Steuerventilen V1, V2 zu einem Ventilblock B zusammengefasst, der auch weitere Steuerventile für zusätzliche Verbraucher umfassen kann.

Die Steuerventile V1 und V2 sowie die Drehzahlsteuerung und/oder -regelung 5 sind an eine als Steuerelektronik ausgeführte Steuereinheit 7 angeschlossen, die mit einem Istwertgeber 8 (in diesem Ausführungsbeispiel ein Positionssensor) und mit einem Sollwertgeber 9 des prioritätsberechtigten Verbrauchers 1 verbunden ist. Darüber hinaus ist ein dem Verbraucher 2 zugeordneter Sollwertgeber 10 mit der Steuereinheit 7 verbunden.

Bei Betätigung des Sollwertgebers 9 des prioritätsberechtigten Verbrauchers 1 stellt die Steuereinheit 7 durch einen Vergleich mit dem vom Istwertgeber 8 gelieferten Signal den Druckmittelbedarf des Verbrauchers 1 fest. In Abhängigkeit von der Abweichung zwischen diesen Werten wird der Spulenstrom des elektro-magnetischen Steuerventils V1 und damit dessen Schieber verstellt, bis Übereinstimmung zwischen den Werten erzielt wird.

Sofern gleichzeitig der Verbraucher 2 angesteuert ist und sich der Istwert des Verbrauchers 1 nicht oder nur unzureichend verändert, beispielsweise zu langsam, wird das elektro-magnetische Steuerventil V2 des Verbrauchers 2 von der Steuereinheit 7 in Schließstellung bewegt. Parallel dazu bzw. zu Beginn des geschilderten Ablaufs kann durch Einwirken auf die Drehzahlsteuerung und/oder -regelung 5 des Elektromotors 4 die Drehzahl der Pumpe 3 angehoben werden, sofem diese nicht bereits mit maximaler Drehzahl läuft. Dadurch wird auch der nicht prioritätsberechtigte Verbraucher 2 so weit wie möglich versorgt.

Die beschriebenen Vorgänge verlaufen in einem kontinuierlichen Prozess. Dabei kann auch der den Elektromotor 4 durchfließende Strom als Maß für den Druck in der hydraulischen Schaltanordnung herangezogen werden, um durch Einbeziehung dieser Information in die Steuereinheit 7 eine genauere Abstimmung zu erzielen.

## Patentansprüche

1. Hydraulische Schaltanordnung mit einer Pumpe, an die eine Mehrzahl von Verbrauchern mit jeweils vorgeschaltetem Steuerventil angeschlossen ist, wobei mindestens ein Verbraucher prioritätsberechtigt ist, **dadurch gekennzeichnet, dass** die Steuerventile (V1, V2) in Abhängigkeit vom Druckmittelbedarf des prioritätsberechtigten Verbrauchers (1) betätigbar sind, wobei zur Ermittlung des Druckmittelbedarfs eine Steuereinheit (7) vorgesehen ist, an die ein Sollwertgeber (9) und ein Istwertgeber (8) des prioritätsberechtigten Verbrauchers (1) angeschlossen sind und wobei die Steuereinheit (7) in Wirkverbindung mit den Steuerventilen (V1, V2) steht.

2. Hydraulische Schaltanordnung nach Anspruch 1, **dadurch gekennzeichnet, dass** zwischen einer an die Pumpe (3) angeschlossenen Versorgungsleitung (P) der Steuerventile (V1, V2) und einer zu einem Tank führenden Rücklaufleitung (R) eine Druckwaage (6) angeordnet ist, die durch den Lastdruck der Verbraucher (1, 2) von einer die Versorgungsleitung (P) mit der Rücklaufleitung (R) verbindenden Stellung in eine Sperrstellung steuerbar ist.

3. Hydraulische Schaltanordnung nach Anspruch 1 oder 2, **dadurch gekennzeichnet, dass** die Pumpe (3) einen einstellbaren Förderstrom aufweist und in Wirkverbindung mit der Steuereinheit (7) steht.

4. Hydraulische Schaltanordnung nach Anspruch 3, **dadurch gekennzeichnet, dass** die Pumpe (3) als Konstantpumpe mit Antrieb durch einen drehzahlveränderlichen Elektromotor (4) ausgebildet ist, der eine an die Steuereinheit (7) angeschlossene Drehzahlsteuerung und/oder -regelung (5) aufweist.

5. Hydraulische Schaltanordnung nach einem der Ansprüche 1 bis 4, **dadurch gekennzeichnet, dass** die Steuerventile (V1, V2) jeweils als elektrisch betätigbare, insbesondere elektro-magnetisch betätigbare Wegeventile ausgebildet sind und die Steuereinheit (7) als Steuerelektronik ausgeführt ist.

6. Hydraulische Schaltanordnung nach einem der Ansprüche 1 bis 5, **dadurch gekennzeichnet, dass** die Steuerventile (V1, V2) zu einem Ventilblock (B) zusammengefasst sind.

7. Hydraulische Schaltanordnung nach einem der Ansprüche 1 bis 6, **dadurch gekennzeichnet, dass** der prioritätsberechtigte Verbraucher (1) als hydraulische Lenkung einer Arbeitsmaschine, insbesondere eines Flurförderzeugs, ausgebildet ist.
